Europäisches Patentamt

European Patent Office

Office européen des brevets

(11) Numéro de publication: **0 554 139 B1**

# FASCICULE DE BREVET EUROPEEN

(45) Date de publication du fascicule du brevet: **13.09.95**   (51) Int. Cl.⁶: **C08F 10/02**, C08F 4/654

(21) Numéro de dépôt: **93400118.1**

(22) Date de dépôt: **19.01.93**

(54) **Procédé de polymérisation de l'éthylène permettant d'obtenir un polymère de distribution large de masses moléculaires, procédé de traitement de la composante catalytique.**

(30) Priorité: **27.01.92 FR 9200819**

(43) Date de publication de la demande:
**04.08.93 Bulletin 93/31**

(45) Mention de la délivrance du brevet:
**13.09.95 Bulletin 95/37**

(84) Etats contractants désignés:
**AT BE DE ES FR GB IT NL PT SE**

(56) Documents cités:
**EP-A- 0 370 864**
**GB-A- 1 554 710**
**GB-A- 1 559 172**

(73) Titulaire: **ELF ATOCHEM S.A.**
**4 & 8, Cours Michelet**
**La Défense 10**
**F-92800 Puteaux (FR)**

(72) Inventeur: **Spitz, Roger**
**44 rue des Fleurs,**
**Serezin**
**F-69369 St. Symphorien d'Ozon (FR)**
Inventeur: **Patin, Maryse**
**rue de la Cité, 12**
**B-4000 Liège (BE)**
Inventeur: **Malinge, Jean**
**Clos St. Pierre**
**F-64320 Idron (FR)**

## Description

La présente invention concerne un procédé de polymérisation de l'éthylène permettant d'obtenir un polymère de distribution large de masses moléculaires, possédant une proportion importante de basses masses moléculaires. L'invention s'applique particulièrement à l'obtention de polyéthylène linéaire haute et basse densité. Le résultat est obtenu grâce au traitement particulier, préalable à sa mise en oeuvre avec un cocatalyseur dans la polymérisation l'éthylène, de la composante catalytique et à la spécificité du support de ladite composante.

L'invention concerne également le procédé de traitement de la composante catalytique.

Il est entendu par polymérisation de l'éthylène, non seulement l'homopolymérisation de l'éthylène, mais encore la copolymérisation de l'éthylène, avec une alpha-oléfine, telle que propylène, butène-1, ou encore l'hexène-1, le taux d'éthylène n'étant pas inférieur à 66 % en poids.

Selon le FR-A-2 639 351, préalablement à sa mise en oeuvre, la composante catalytique, constituée d'au moins un dérivé du magnésium, choisi parmi les composés de formule $Mg-OR_2)_nCl_{2-n}$ dans laquelle $R_2$ est l'hydrogène ou un radical hydrocarboné linéaire ou cyclique et "n" est un nombre inférieur ou égal à 2, et d'au moins un dérivé chloré du titane sous sa forme III et/ou IV, subit une réduction par un composé métallique possédant au moins une liaison métal-carbone ou métal-hydrogène, suivie d'un traitement par un composé halogéné de métal de transition. Ce traitement de la composante catalytique utilisée ensuite dans le système catalytique de polymérisation de l'éthylène permet la fabrication de polymère de distribution large de masses moléculaires. Toutefois le polymère obtenu contient moins de 10 % en poids de masses moléculaires inférieures à 10 000.

Selon l'invention, il est constaté qu'en faisant subir le traitement précédent à une composante catalytique dont le dérivé de magnésium est un complexe $MgCl_2$, $MgO$, le polymère ultérieurement obtenu possède non seulement une distribution large de masses moléculaires, mais encore contient au moins 10 % en poids de chaînes polymériques de masses moléculaires inférieures à 10 000.

Les polymères de distribution large de masses moléculaires, utilisés industriellement en particulier dans les techniques d'extrusion-soufflage, se distinguent par leur polydispersité et leur indice de fluidité des polymères de distribution étroite de masses moléculaires utilisés industriellement en particulier pour l'injection.

Les polymères de distribution de masses moléculaires étroites possèdent en moyenne une polydispersité de 4 à 6 environ, la polydispersité étant le rapport de la masse moléculaire en poids sur la masse moléculaire en nombre. Ces polymères à forte fluidité possèdent un rapport d'indice de fluidité $MFR_{21-2}$ inférieur à 35, ce $MFR_{21-2}$ étant selon la norme ASTM D 1238 le rapport $MI_{21}/MI_2$ de l'indice de fluidité sous 21,6 kg sur l'indice de fluidité sous 2,16 kg ; le $MFR_{21-5}$ rapport des indices de fluidité sous 21,6 kg sur l'indice de fluidité sous 5 kg, $MI_{21}/MI_5$ selon la norme ASTM D 1238, étant inférieur à 10. Ces produits sont obtenus en monoréacteur par polymérisation de l'éthylène en suspension, en solution ou en phase gazeuse en présence d'un catalyseur spécifique du type Ziegler constitué d'un cocatalyseur, en général un alkylaluminium, et d'une composante catalytique contenant du Ti, Mg, Cl et éventuellement un donneur d'électrons. Les produits obtenus de distribution étroite possèdent une élasticité limitée ce qui évite le phénomène néfaste de retrait à l'injection.

De tels produits, du fait de leur manque d'élasticité sont inadaptés aux techniques demandant une résistance mécanique importante à l'état fondu, comme par exemple dans le cas de l'extrusion-soufflage. Lorsque ces propriétés sont recherchées, on utilise des polymères de distribution large de masses moléculaires possédant de préférence un rapport d'indice de fluidité $MFR_{21-5}$ supérieur à 16 pour un indice de fluidité $MI_5$ de l'ordre de 1 à 1,5 ou un rapport $MI_{21}/MI_2$ supérieur à 55.

La fabrication industrielle de ces produits en monoréacteur présente de grandes difficultés en présence de catalyseur de type Ziegler.

Selon "Adv. in Polymer Science 51" pp. 101 à 153 (1983 "Control of Molecular - Weight Distribution in Polyolefins Synthesized with ziegler - Natta Catalyst Systems" de U. Zucchini et G. Cecchin, document qui reflète l'art antérieur sur la question, le meilleur moyen pour obtenir un polymère de distribution large de masses moléculaires en présence d'un catalyseur du type Ziegler est d'effectuer la polymérisation en plusieurs étapes ou en "cascade" à partir de deux réacteurs successifs au moins. Toutefois, même dans ces meilleures conditions il n'est pas facile de fabriquer un polyéthylène de $MFR_{21-5}$ supérieur à 16, une condition nécessaire étant de partir de catalyseurs donnant des distributions larges en monoréacteur. En outre ce procédé présente l'inconvénient de nécessiter au moins deux réacteurs ce qui entraîne une perte de productivité par rapport à l'importance de l'installation et un contrôle délicat du fait de l'activité de plusieurs réacteurs au lieu d'un seul.

EP 0 554 139 B1

Selon le FR-A-2 596 398 il est possible d'obtenir par polymérisation de l'éthylène en monoréacteur, un polymère de distribution large de masses moléculaires avec un MFR $MI_{21}/MI_5$ supérieur à 16. Pour obtenir ce résultat est utilisée comme composante catalytique un mélange de $MgCl_2$ et de $TiCl_4$ obtenu par cobroyage. Outre le cobroyage des composantes qui nécessite des règles industriellement complexes, le procédé présente l'inconvénient d'une mise en oeuvre d'une composante de structure mal définie, ce qui entraîne la fabrication de polymère de répartition granulaire hétérogène.

Le procédé de l'invention a pour avantage de mettre en oeuvre une composante catalytique de structure contrôlée permettant la fabrication de polymère de distribution large de masses moléculaires, le rapport $MI_{21}/MI_5$ étant supérieur à 16 et pouvant dépasser 25 pour les produits de hautes masses moléculaires, en particulier pour les produits dont l'indice de fluidité $MI_2$ est inférieur à 0,5, et le rapport $MI_{21}/MI_2$ étant supérieur à 55. En outre le procédé a pour second avantage de mettre en oeuvre une composante catalytique permettant la fabrication de polymère possédant au moins 10 % en poids, et de préférence moins de 20 % en poids, de chaînes polymériques de masses moléculaires inférieures à 10 000.

La présence de ces faibles masses moléculaires en quantités importantes présente l'avantage de conférer une grande facilité de mise en oeuvre du polymère.

Pour obtenir ces résultats l'éthylène est polymérisé en présence d'un catalyseur constitué d'un cocatalyseur choisi généralement parmi les alkylaluminiums et d'une composante catalytique à base d'au moins Mg, Ti et Cl, la composante catalytique étant obtenu par traitement de réduction d'une composante combinant au moins un composé chloré du titane sous sa forme III et/ou IV et un dérivé du magnesium, de façon à ce qu'au moins 50 % en poids de titane voit son degré d'oxydation initial réduit d'au moins une unité, puis traitement par un composé chloré de métal de transition, la caractéristique étant que le Mg de la composante se trouve initialement sous la forme $MgCl_2$, MgO.

La composante, obtenue en employant les moyens de réalisation connus, est le résultat de la combinaison d'au moins un composé du titane et d'un support contenant du magnésium. La caractéristique de l'invention, combinée aux traitements ultérieurs de la composante, étant que le support est un composé $MgCl_2$,MgO.

Le composé du titane est choisi habituellement parmi les composés chlorés du titane de formule Ti $(OR)_x Cl_{4-x}$ dans laquelle :

- R est un radical hydrocarboné aliphatique ou aromatique de $C_1$ à $C_{14}$, ou $COR^1$ avec $R^1$ un radical hydrocarboné aliphatique ou aromatique de $C_1$ à $C_{14}$
- x est un nombre de 0 à 4

Le $MgCl_2$,MgO utilisable contient de préférence de 10 à 50 % en poids et mieux de 15 à 40 % en poids de MgO pour 90 à 50 % en poids et mieux de 85 à 60 % en poids de $MgCl_2$.

Le $MgCl_2$, MgO servant de support pour la composante catalytique peut être obtenu par tout moyen connu. Toutefois, selon l'invention il est recommandé d'utiliser un $MgCl_2$,MgO obtenu par mise en contact de $MgCl_2$ hydraté avec un alcool suivi d'un traitement thermique après élimination partielle de l'alcool, la caractéristique de la mise en contact étant de mettre en suspension le $MgCl_2$ hydraté dans l'alcool, le rapport molaire alcool sur $MgCl_2$ hydraté étant inférieur au rapport de solubilité de ces deux corps à la température de la suspension. Selon le procédé il est indispensable que du $MgCl_2$ reste en suspension dans l'alcool sursaturé en $MgCl_2$. Dans ces conditions il est préférable que le milieu reste biphasique et tel qu'il contienne suffisamment d'alcool pour maintenir du $MgCl_2$ en suspension.

L'alcool adapté au procédé est choisi parmi les monoalcools linéaires ou ramifiés possédant un nombre de carbone de 4 à 16.

Dans les conditions opératoires recommandées, la mise en suspension s'effectue de façon classique en mettant en contact avec l'alcool, de préférence sous agitation, le $MgCl_2$ hydraté de structure quelconque. Le $MgCl_2$ est maintenu en suspension pendant un temps suffisant, généralement plus de 3 heures pour permettre le gonflement à coeur des particules par l'alcool. Afin d'obtenir les meilleurs résultats, il est recommandé d'opérer pendant la durée de la mise en oeuvre du procédé sensiblement à une température de 0 à 150°C de préférence de 60 à 120°C, sachant que, comme déjà précisé, du $MgCl_2$ doit rester en suspension dans l'alcool sursaturé.

Une fois cette opération de réarrangement des particules terminée, les particules de $MgCl_2$ hydraté en suspension sont séparées de l'alcool saturé de $MgCl_2$, de préférence lavées par exemple par un hydrocarbure et de préférence séchées avant d'être traitées thermiquement à une température généralement comprise entre 300°C et 600°C de façon à former le $MgCl_2$,MgO sans détruire le réarrangement granulométrique. Le traitement de séchage se fait habituellement sous vide ou encore en lit fluidisé en milieu de gaz inerte préalablement séché.

3

Le MgCl$_2$,MgO obtenu contient habituellement de 15 à 40 % en poids de MgO. La taille moyenne des particules de MgCl$_2$,MgO est généralement de 5 à 200 $\mu$m et mieux de 10 à 120 $\mu$m pour une distribution granulométrique resserrée. Habituellement la largeur de distribution granulométrique exprimée en

$$\underline{\frac{D90}{D10}}$$

est inférieure à 9 et plus généralement inférieure à 7.

D90 est le diamètre en-dessous duquel se trouvent 90 % en masse des particules et D10 est le diamètre en-dessous duquel se trouvent 10 % en masse des particules.

Le MgCl$_2$ hydraté initial est un MgCl$_2$, x H$_2$O, avec 0,3 ≤ x ≤ 12. Cet MgCl$_2$ hydraté est habituellement un MgCl$_2$, 6H$_2$O commercial ou obtenu en hydratant ou deshydratant ce MgCl$_2$, 6H$_2$O commercial.

Le MgCl$_2$,MgO peut également être directement obtenu par traitement thermique en milieu inerte du MgCl$_2$, x H$_2$O avec 1 ≤ x ≤ 12, à une température comprise entre 300 et 600°C, le produit obtenu étant activé par exemple par broyage en présence de préférence d'un lubrifiant tel que le durène ou l'adamantane.

Aux éléments essentiels de la composante catalytique peut être associé tout autre composé utilisable dans ce type de composante tel que composé chloré, donneur ou accepteur d'électrons.

Du chlore peut provenir directement de l'halogénure de titane et/ou de l'halogénure de magnésium, mais il peut également provenir d'un agent chlorant indépendant tel que l'acide chlorhydrique ou un halogénure organique comme le chlorure de butyle.

Le donneur ou accepteur d'électrons est un composé organique liquide ou solide connu pour entrer dans la composition de ces composantes catalytiques. Le donneur d'électrons peut être un composé mono ou polyfonctionnel avantageusement choisi parmi les acides carboxyliques aliphatiques ou aromatiques et leurs esters alcoyliques, les éthers aliphatiques ou cycliques, les cétones, les esters vinyliques, les dérivés acryliques, en particulier acrylates ou méthacrylates d'alcoyle, et les silanes. Conviennent notamment comme donneurs d'électrons les composés tels que paratoluate de méthyle, benzoate d'éthyle, acétate d'éthyle ou de butyle, éther éthylique, para-anisate d'éthyle, dibutylphtalate, dioctylphtalate, diisobutylphtalate, tétrahydrofuranne, dioxane, acétone, méthylisobutylcétone, acétate de vinyle, méthacrylate de méthyle et les silanes tels que phényltriéthoxysilane, les alcoxysilanes aromatiques ou aliphatiques.

L'accepteur d'électrons est un acide de Lewis, choisi de préférence parmi les chlorures d'aluminium, le trifluorure de bore, le chloranile ou encore les alcoylaluminiums et alcoylmagnésiums.

La composante catalytique se présente sous la forme d'un complexe entre au moins Mg, Ti, Cl, le titane se trouvant sous forme chlorée de Ti$^{IV}$, de Ti$^{III}$ ou de mélange des deux, avec éventuellement un donneur ou accepteur d'électrons. La composante catalytique peut se trouver telle quelle sous forme de complexe, mais également sous forme de dépôt bisupporté sur un second support minéral comme SiO$_2$ ou Al$_2$O$_3$ ou organique par exemple de type polymère.

La composante catalytique telle que définie précédemment est dans une première étape traitée par un réducteur. Il s'agit d'un composé gazeux, liquide ou soluble dans les hydrocarbures, capable, comme il est connu de façon générale en chimie, de diminuer le degré d'oxydation du Ti$^{IV}$ et/ou Ti$^{III}$. Le réducteur utilisé est de préférence un composé métallique possédant au moins une liaison métal-carbone ou métal-hydrogène. Les composés métalliques possédant au moins une liaison métal-carbone sont habituellement choisis parmi les composés MQ$_y$ Cl$_{z-y}$, M étant un métal des groupes I, II et III de la classification périodique et plus particulièrement Al et Mg, Q étant un radical hydrocarbone linéaire ou cyclique, "z" étant un nombre correspondant à la valence maximale du métal et "y" un nombre inférieur ou égal à "z". Dans la définition de ces composés sont également compris les produits d'addition de ces composés entre eux comme par exemple : NaAl(C$_2$H$_5$)$_4$ ou les produits obtenus en pontant par un oxygène deux composés métalliques définis précédemment comme par exemple les alumoxanes ou les aluminosiloxanes. Parmi ces composés métalliques on préfère les alumoxanes, les aluminosiloxanes, les dialkylmagnésiens et les alkylaluminiums du type Al(R$^3$)$_c$X$_d$ où

- X est Cl et
- R$^3$ représente un radical hydrocarboné saturé de C$_1$ à C$_{14}$, ou (OR$^4$) avec R$^4$ qui est un radical hydrocarboné saturé de C$_1$ à C$_{14}$ avec 0 ≤ d ≤ 1,5 et c + d = 3.

Comme exemples on peut citer : Al(C$_2$H$_5$)$_3$, Al(C$_2$H$_5$)$_2$Cl, Al(C$_4$H$_9$)$_3$, Al$_2$(C$_2$H$_5$)$_3$Cl$_3$, Al(C$_6$H$_{13}$)$_3$, Al(C$_8$H$_{17}$)$_3$ et Al(C$_2$H$_5$)$_2$(OC$_2$H$_5$).

Les composés métalliques possédant au moins une liaison métal-hydrogène sont habituellement choisis parmi les composés MQ'$_c$X$_d$H$_e$ où M est un métal tel que défini précédemment, Q' étant un radical

4

hydrocarboné linéaire ou cyclique, X est Cl ou choisi parmi les radicaux Q' précédents avec $0 < d < 1,5$ $1 < e < z$ et $c + d + e = z$, z correspondant à la valence maximale de M. Parmi ces composés on peut citer les hydrures tels que $Al(C_4H_9)_2H$, $Al(C_2H_5)_2H$, $(C_2H_5)_4B_2H_2$, les hydrures mixtes tels que : aluminium-lithium : $AlLiH_4$. Il peut évidemment s'agir d'association d'hydrures entre eux ou avec des composés organométalliques définis précédemment.

Dans cette étape la composante est traitée sous atmosphère inerte par le réducteur, telle quelle ou en présence d'un diluant à la fois solvant du réducteur et inerte vis-à-vis de ce dernier ainsi que de la composante. Les hydrocarbures conviennent entre autres pour cette application. Bien que la température de réaction ne soit pas critique, pour des raisons de durée de réaction raisonnable la réduction s'effectue de préférence de la température ambiante à 150°C sous pression atmosphérique ou sous pression et mieux entre 40 et 100°C sous pression atmosphérique pour des durées de réaction de l'ordre de 10 minutes à 24 heures.

On arrête la réaction de réduction lorsqu'au moins 50 % en poids du titane initial a son degré d'oxydation réduit d'au moins une unité, par exemple quand 50 % du $Ti^{IV}$ est réduit en $Ti^{III}$ ou du $Ti^{III}$ en $Ti^{II}$. Il est cependant préférable de pousser le plus possible la réduction du titane, aussi est-il recommandé d'arrêter la réduction lorsque le degré de réduction moyen du titane est le plus voisin de II. Dans cette étape de réduction le rapport molaire du

$$\underline{\text{métal réducteur}}$$
$$\text{titane}.$$

est de préférence supérieur à 2 et mieux compris entre 10 et 50.

La réaction de réduction est arrêtée par refroidissement et lavage du produit obtenu, de préférence par un hydrocarbure, pour éliminer le réducteur en excès. Le produit résultant est éventuellement séché.

Dans la seconde étape, le produit réduit obtenu est traité par un composé chloré de métal de transition. Ce composé chloré est le plus souvent un chlorure, un alcoxychlorure ou un oxychlorure de métal de transition choisi parmi le titane, le vanadium, le chrome, le zirconium tel que par exemple le $TiCl_4$ ou $VCl_4$. Il est préférable, pour faciliter la réaction de chloration, d'utiliser un composé chloré liquide ou soluble dans un solvant inerte vis-à-vis des produits mis en contact. Le traitement s'effectue en mettant en contact en atmosphère inerte le produit réduit de la première étape avec le composé chloré. La température de contact, là encore, n'est pas critique. Pour des raisons pratiques, il est recommandé de traiter les produits en contact à une température comprise entre la température ambiante et 150°C et mieux entre 60 et 100°C pour des durées de traitement comprises entre quelques minutes et 4 heures. La quantité de composé chloré de métal de transition mis en oeuvre est de préférence d'au moins la moitié de la stoechiométrie, et mieux voisine de la stoechiométrie ou en excès par rapport à la teneur en titane du produit obtenu en fin de la première étape. Après traitement la composante est finalement récupérée sous atmosphère inerte après lavage et éventuellement séchage.

La composante catalytique obtenue après ces deux étapes de traitement est utilisée de façon classique avec un cocatalyseur habituellement connu, choisi généralement parmi les alkylaluminiums, dans les procédés de polymérisation en suspension ou en phase gazeuse des oléfines.

Dans un procédé de polymérisation d'éthylène en suspension, on opère de façon habituelle dans un milieu liquide hydrocarboné à des températures pouvant aller jusqu'à 120°C et sous des pressions pouvant aller jusqu'à 250 bars.

La polymérisation d'éthylène en phase gazeuse, en présence d'hydrogène et de gaz inerte peut être effectuée dans tout réacteur permettant une polymérisation en phase gazeuse et en particulier dans un réacteur à lit agité ou à lit fluidisé. Les conditions de mise en oeuvre sont connues de l'art antérieur. On opère généralement à une température inférieure au point de fusion Tf du polymère ou copolymère à synthétiser et plus particulièrement entre 20°C et (Tf -5°C) et sous une pression telle que l'éthylène et éventuellement les autres monomères hydrocarbonés présents dans le réacteur soient essentiellement en phase vapeur.

La polymérisation peut s'effectuer en deux étapes. Dans une première étape il est possible de consolider le système catalytique en effectuant une prépolymérisation à base d'éthylène en présence des constituants du système catalytique et d'un cocatalyseur, puis en poursuivant dans une seconde étape la polymérisation par ajout d'éthylène ou d'un mélange d'éthylène et d'une alpha-oléfine tel que déjà cité. L'étape de prépolymérisation présente une formation de polymère ne dépassant pas 10 % en poids du polymère total devant être formé. Cette étape de prépolymérisation est exécutée en suspension en présence d'un diluant hydrocarboné, en phase gazeuse ou en combinaison de suspension et de phase gazeuse.

Les exemples suivants illustrent l'invention sans la limiter.

Dans les exemples la détermination des masses moléculaires est effectuée par GPC (Gel permeation chromatography ou chromatographie d'exclusion stérique). Le polymère est dissous dans du trichlorobenzène à 135°C, à une concentration de 1 %, puis filtré et injecté dans un jeu de colonnes TSK à une température de 145°C avec un débit de 1 ml/mn, le volume injecté étant de 410 ml.

EXEMPLE 1

49 g de $(MgCl_2, 6H_2O)$ sont traités sous vide de 2 Pascal à 500°C pendant 2 heures, la montée en température étant de 10°C/minute. 18,4 g de solide A contenant 35 % en poids de MgO sont obtenus.

9,8 g de solide A sont broyés 8 heures avec 0,4 g d'adamantane. Le solide récupéré du bol de broyage avec de l'heptane est lavé trois fois avec 100 ml d'heptane.

Après lavage le solide est mis en contact avec 40 ml de $TiCl_4$ à 80°C pendant 2h30. Après trois lavages avec 100 ml d'heptane le solide B obtenu est séché sous vide.

2,3 g du solide B séché sont traités dans l'heptane par 5 ml de triéthylaluminium à la concentration de 0,9 mol/litre, le rapport Al/Ti étant de sensiblement 33, pendant 3 heures à 80°C. Le solide obtenu est rincé trois fois, à l'abri de l'air, avec 100 ml d'heptane. Le produit obtenu est mis en contact avec 0,16 ml de $TiCl_4$ pendant 3 heures à 70°C. Après 3 lavages à l'heptane, le solide obtenu est séché sous vide. Une composante catalytique solide C contenant 2,9 % en poids de titane est obtenu.

La composante catalytique C est engagée en polymérisation de l'éthylène en suspension. Dans un réacteur d'un litre en inox muni d'une agitation par pâle tournant à 750 tours/minute sont introduits successivement à tempérture ambiante sous atmosphère inerte : 500 ml d'heptane, 3 mM de triisobutylaluminium et 28 mg de la composante catalytique C.

De l'hydrogène est ajouté jusqu'à l'obtenion d'une pression partielle de 3,6 bars dans le réacteur. On complète avec de l'éthylène en ajustant la pression pour atteindre 8 bars absolus de pression totale après chauffage à 80°C. Cette pression totale est maintenue constante pendant 1 heure par addition d'éthylène.

Au bout d'une heure, l'injection d'éthylène est arrêtée, après refroidissement à température ambiante le catalyseur est désactivé par addition d'une solution de méthanol légèrement acidifiée par HCl à 10 %. La suspension de polymère est filtrée puis séchée.

Les résultats obtenus sont les suivants :

$MI_5$ = 0,9

$MI_{21}$ = 16,6

$MI_{21}/MI_5$ = 18,4

$MI_{21}/MI_2$ = 87,3

Masses moléculaires < 10000 = 13,5 % en poids.

EXEMPLE 2

2,1 g de solide B séché sont traités dans l'heptane par 4,4 ml de triéthylaluminium à la concentration de 1,28 mol/l (Al/Ti = 35,4) pendant 3 heures à 70°C. Le solide obtenu est rincé trois fois, à l'abri de l'air, avec 100 ml d'heptane. Le produit obtenu est mis en contact avec 10 ml de $TiCl_4$ pur pendant 2 heures à 75°C. Après 3 lavages à l'heptane, le solide obtenu est séché sous vide. On obtient une composante catalytique D contenant 4,9 % en poids de titane.

La composante catalytique D est engagée en polymérisation en suspension dans les conditions de l'exemple 1 avec 3,7 bars (essai 1) et 4 bars (essai 2) d'hydrogène.

A titre comparatif, on répète l'essai 2 avec une composante catalytique obtenue selon l'exemple 2 composante E du FR-A-2 639 351

| Essai | $MI_5$ | $MI_{21}$ | $MI_{21}/MI_5$ | $MI_{21}/MI_2$ | Masses Moléculaires <10 000 |
|---|---|---|---|---|---|
| 1 | 0,55 | 12,8 | 23,3 | 128,0 | 15,3 % en poids |
| 2 | 1,9 | 33,4 | 17,6 | 83,4 | 17,2 % en poids |
| 2 comparatif | 0,6 | 13,0 | 21,7 | 100,3 | 7,4 % en poids |

EP 0 554 139 B1

EXEMPLE 3

19,2 g de ($MgCl_2$ $6H_2O$) sont traités sous vide de 2 Pascal à 500°C pendant 2 heures, la montée en température étant de 5°C/minute pendant 20 minutes puis 10°C/minute ensuite. On obtient 7,2 g de solide E contenant 35 % en poids de MgO.

6,5 g de solide E sont broyés 8 heures avec 0,33 g d'adamantane. Le solide récupéré est extrait du bol de broyage avec de l'heptane, lavé trois fois avec 100 ml d'heptane et séché sous vide.

Le solide obtenu est ensuite mis en contact avec 40 ml de $TiCl_4$ à 70°C pendant 2 heures. Après 3 lavages avec 100 ml d'heptane, ce solide F est séché sous vide.

1,5 g de F sont traités dans l'heptane par 5 ml de triéthylaluminium à la concentration de 1,3 mol/l (Al/Ti = 24,6) pendant 2 heures à 65°C. Le solide obtenu est rincé trois fois, à l'abri de l'air, avec 100 ml d'heptane. Le produit obtenu est mis en contact avec 10 ml de $TiCl_4$ pendant 2 heures à 80°C. Le solide obtenu est séché sous vide. On obtient une composante catalytique G contenant 7,4 % en poids de titane.

la composante catalytique G est engagée en polymérisation en suspension dans les conditions de l'exemple 1, mais avec du trihexylaluminium et 3,4 bars d'hydrogène.

A titre comparatif, on répète l'essai avec une composante catalytique obtenue selon l'exemple 2 composante D du FR-A-2 639 351.

Les résultats obtenus sont les suivants :

| Composante | $MI_5$ | $MI_{21}$ | $MI_{21}/MI_5$ | $MI_{21}/MI_2$ | Masses Moléculaires < 10 000 |
|---|---|---|---|---|---|
| G | 0,77 | 16,3 | 21,2 | 116,4 | 18,8 % en poids |
| Essai comparatif | 0,77 | 18,0 | 23,4 | 120,7 | 7,9 % en poids |

EXEMPLE 4

Sous argon, 70,2 g de ($MgCl_2$, $6H_2O$) sont mis en contact avec 52 ml d'éthyl-2 hexanol. Le tout est porté à 95°C sous agitation pendant 6 heures. Le solvant est éliminé par décantation et siphonnage. Le solide est lavé quatre fois, à l'abri de l'air, avec 100 ml d'heptane et séché sous vide de la température ambiante à 120°C.

Ce solide subit le traitement thermique sous vide de 2 Pascal suivant :
- montée à 120°C à 10°C/minute
- montée à 350°C à 6°C/minute-palier de 2 heures à 350°C
- montée à 450°C à 10°C/minute-palier de 30 mn. à 450°C.

On obtient 28,2 g de solide H $MgCl_2$-MgO contenant 25 % en poids de MgO.

Le solide H obtenu est ensuite mis en contact avec 80 ml de $TiCl_4$ à 85°C pendant 1 heure. Après 3 lavages avec 100 ml d'heptane, ce solide I est séché sous vide.

1,0 g de I est traité dans l'heptane par 16 ml de triéthylaluminium à la concentration de 1,1 mol/l (Al/Ti = 32,4) pendant 6 heures à 80°C. Le solide obtenu est rincé quatre fois, à l'abri de l'air, avec 100 ml d'heptane. Le produit obtenu est mis en contact avec 5 ml de $TiCl_4$ pendant 2 heures à 80°C. Après trois lavages à l'heptane, le solide obtenu est séché sous vide. On obtient une composante catalytique J contenant 1,2 % en poids de titane.

La composante catalytique J est engagée en polymérisation en suspension dans les conditions de l'exemple 1 avec 3,0 bars d'hydrogène.

Les résultats obtenus sont les suivants :

$MI_5$ = 0,66

$MI_{21}$ = 10,2

$MI_{21}/MI_5$ = 15,4

$MI_{21}/MI_2$ = 70,1

Masses moléculaires < 10 000 = 10,6 % en poids.

**Revendications**

1. Procédé de polymérisation de l'éthylène ou de copolymérisation de l'éthylène avec une alpha-oléfine, en suspension ou en phase gazeuse, en présence d'un catalyseur constitué d'un cocatalyseur et d'une composante catalytique à base d'au moins Mg, Ti et Cl, ladite composante catalytique étant obtenue

7

par
- traitement de réduction d'une composante combinant au moins un composé chloré du titane sous sa forme III et/ou IV et un dérivé du magnésium, de façon à ce qu'au moins 50 % en poids du titane voit son degré d'oxydation initial réduit d'au moins une unité, puis
- traitement par un composé chloré de métal de transition, caractérisé en ce que le dérivé du magnésium se trouve sous la forme $MgCl_2$, MgO.

2. Procédé selon la revendication 1 caractérisé en ce que le $MgCl_2$, MgO contient de 10 à 50% en poids de MgO.

3. Procédé selon l'une des revendications 1 ou 2 caractérisé en ce que le $MgCl_2$,MgO est obtenu par mise en contact de $MgCl_2$ hydraté avec un alcool suivi d'un traitement thermique après élimination partielle de l'alcool, la caractéristique de la mise en contact étant de mettre en suspension le $MgCl_2$ hydraté dans l'alcool, le rapport molaire alcool sur $MgCl_2$ hydraté étant inférieur au rapport de solubilité de ces deux corps à la température de la suspension.

4. Procédé selon l'une des revendications 1 ou 2 caractérisé en ce que le $MgCl_2$, MgO est obtenu par traitement thermique en milieu inerte de $MgCl_2$, $xH_2O$, avec $1 < x < 12$, à une température entre 300 et 600°C, le $MgCl_2$, MgO obtenu étant activé par broyage.

5. Composante catalytique à base d'au moins Mg, Ti et Cl obtenue par
- traitement de réduction d'une composante combinant au moins un composé chloré du titane sous sa forme III et/ou IV et un dérivé du magnésium, de façon à ce qu'au moins 50 % en poids du titane voit sont degré d'oxydation initial réduit d'au moins une unité, puis
- traitement par un composé chloré de métal de transition, caractérisée en ce que le dérivé du magnésium se trouve sous la forme $MgCl_2$, MgO.

6. Composante catalytique selon la revendication 5 caractérisée en ce que le $MgCl_2$, MgO contient de 10 à 50 % en poids de MgO.

7. Composante catalytique selon la revendication 5 ou 6 caractérisée en ce que le $MgCl_2$, MgO est obtenu par mise en contact de $MgCl_2$ hydraté avec un alcool suivi d'un traitement thermique après élimination partielle de l'alcool, la caractéristique de la mise en contact étant de mettre en suspension le $MgCl_2$ hydraté dans l'alcool, le rapport molaire alcool sur $MgCl_2$ hydraté étant inférieur au rapport de solubilité de ces deux corps à la température de la suspension.

8. Composante catalytique selon l'une des revendications 5 ou 6 caractérisée en ce que le $MgCl_2$, MgO est obtenu par traitement thermique en milieu inerte de $MgCl_2$, $xH_2O$, avec $1 < x < 12$, à une température entre 300 et 600°C, le $MgCl_2$, MgO obtenu étant activé par broyage.

**Claims**

1. Process for the polymerization of ethylene or copolymerization of ethylene with an alpha-olefin, in suspension or in the gaseous phase, in the presence of a catalyst consisting of a cocatalyst and a catalytic component based on at least Mg, Ti and Cl, the said catalytic component being obtained by
- reductive treatment of a component combining at least one chlorinated compound of titanium in its III and/or IV form and a magnesium derivative, so that at least 50% by weight of the titanium undergoes a reduction of its initial oxidation number by at least one unit, followed by
- treatment with a chlorinated transition metal compound, characterized in that the magnesium derivative is in the form $MgCl_2$.MgO.

2. Process according to Claim 1, characterized in that the $MgCl_2$.MgO contains from 10 to 50% by weight of MgO.

3. Process according to either of Claims 1 and 2, characterized in that the $MgCl_2$.MgO is obtained by bringing hydrated $MgCl_2$ into contact with an alcohol followed by a heat treatment after partial removal of the alcohol, the feature of the bringing of these substances into contact being to suspend the hydrated $MgCl_2$ in the alcohol, the mole ratio of alcohol to hydrated $MgCl_2$ being less than the solubility ratio of these two substances at the temperature of the suspension.

4. Process according to either of Claims 1 and 2, characterized in that the $MgCl_2.MgO$ is obtained by heat treatment in an inert medium of $MgCl_2.xH_2O$, with $1 < x < 12$, at a temperature between 300 and 600°C, the $MgCl_2.MgO$ obtained being activated by grinding.

5. Catalytic component based on at least Mg, Ti and Cl, obtained by
   - reductive treatment of a component combining at least one chlorinated compound of titanium in its III and/or IV form and a magnesium derivative, so that at least 50% by weight of the titanium undergoes a reduction of its initial oxidation number by at least one unit, followed by
   - treatment with a chlorinated transition metal compound,
   characterized in that the magnesium derivative is in the form $MgCl_2.MgO$.

6. Catalytic component according to Claim 5, characterized in that the $MgCl_2.MgO$ contains from 10 to 50% by weight of MgO.

7. Catalytic component according to Claim 5 or 6, characterized in that the $MgCl_2.MgO$ is obtained by bringing hydrated $MgCl_2$ into contact with an alcohol followed by a heat treatment after partial removal of the alcohol, the feature of the bringing of these substances into contact being to suspend the hydrated $MgCl_2$ in the alcohol, the mole ratio of alcohol to hydrated $MgCl_2$ being less than the solubility ratio of these two substances at the temperature of the suspension.

8. Catalytic component according to either of Claims 5 and 6, characterized in that the $MgCl_2.MgO$ is obtained by heat treatment in an inert medium of $MgCl_2.xH_2O$, with $1 < x < 12$, at a temperature between 300 and 600°C, the $MgCl_2.MgO$ obtained being activated by grinding.

**Patentansprüche**

1. Verfahren zur Polymerisation von Ethylen oder Copolymerisation von Ethylen mit einem alpha-Olefin in Suspension oder in der Gasphase in Gegenwart eines aus einem Cokatalysator und einem katalytischen Bestandteil auf Basis wenigstens von Magnesium, Titan und Chlor bestehenden Katalysators, wobei der katalytische Bestandteil erhalten wird durch:
   - die Reduktionsbehandlung eines Bestandteils, in dem wenigstens eine chlorierte Titan(III)- und/oder Titan(IV)-Verbindung und eine Magnesium-Verbindung gemeinsam vorliegen, wobei die ursprünglich vorliegende Oxidationszahl von mindestens 50 Gew.-% des Titans um wenigstens eine Einheit reduziert wird, und anschließend
   - Behandlung mit einer chlorierten Übergangsmetallverbindung,
   dadurch gekennzeichnet, daß die Magnesiumverbindung als MgCl2 • MgO vorliegt.

2. Verfahren nach Anspruch 1, dadurch gekennzeichnet, daß das MgCl2 • MgO 10 bis 50 Gew-% MgO enthält.

3. Verfahren nach Anspruch 1 oder 2, dadurch gekennzeichnet, daß das MgCl2 • MgO durch Kontaktierung von $MgCl_2$-Hydrat mit einem Alkohol, gefolgt von einer thermischen Behandlung nach teilweiser Entfernung des Alkohols erhalten wird, dadurch gekennzeichnet, daß die Kontaktierung in der Suspendierung des $MgCl_2$-Hydrats in dem Alkohol besteht, wobei das Molverhältnis von Alkohol zu $MgCl_2$-Hydrat unter dem Löslichkeitsverhältnis der beiden Bestandteile bei der Suspensionstemperatur liegt.

4. Verfahren nach Anspruch 1 oder 2, dadurch gekennzeichnet, daß das MgCl2 • MgO durch thermische Behandlung von $MgCl_2$ • $xH_2O$ mit $1 < x < 12$ in einem inerten Medium bei einer Temperatur zwischen 300 und 600 °C erhalten wird, wobei das erhaltene MgCl2 • MgO durch Vermahlen aktiviert wird.

5. Katalytischer Bestandteil auf Basis wenigstens von Magnesium, Titan und Chlor erhalten durch:
   - Reduktionsbehandlung eines Bestandteils, in dem wenigstens eine chlorierte Titan(III)- und/oder Titan(IV)-Verbindung und eine Magnesium-Verbindung gemeinsam vorliegen, wobei die ursprüngliche Oxidationszahl von wenigstens 50 Gew.-% des Titans um wenigstens eine Einheit reduziert wird, und anschließend

- Behandlung mit einer chlorierten Übergangsmetallverbindung,

dadurch gekennzeichnet, daß die Magnesiumverbindung $MgCl_2 \cdot MgO$ ist.

6. Katalytischer Bestandteil nach Anspruch 5, dadurch gekennzeichnet, daß das $MgCl_2 \cdot MgO$ 10 bis 50 Gew.-% MgO enthält.

7. Katalytischer Bestandteil nach Anspruch 5 oder 6, dadurch gekennzeichnet, daß das $MgCl_2 \cdot MgO$ erhalten wird durch Kontaktierung von $MgCl_2$-Hydrat mit einem Alkohol, gefolgt von einer thermischen Behandlung nach teilweiser Entfernung des Alkohols, dadurch gekennzeichnet, daß die Kontaktierung in der Suspendierung des $MgCl_2$-Hydrat in dem Alkohol besteht, wobei das Molverhältnis von Alkohol zu $MgCl_2$-Hydrat unter dem Löslichkeitsverhältnis der beiden Bestandteile bei der Suspensionstemperatur liegt.

8. Katalytischer Bestandteil nach Anspruch 5 oder 6, dadurch gekennzeichnet, daß das $MgCl_2 \cdot MgO$ durch thermische Behandlung von $MgCl_2 \cdot xH_2O$ mit $1 < x < 12$ in einem inerten Medium bei einer Temperatur zwischen 300 und 600 °C erhalten wird, wobei das erhaltene $MgCl_2 \cdot MgO$ durch Vermahlen aktiviert wird.